# EUROPÄISCHE PATENTSCHRIFT

(11) **EP 2 665 582 B1**
(45) Veröffentlichungstag und Bekanntmachung des Hinweises auf die Patenterteilung: **05.11.2014**
(21) Anmeldenummer: 12700835.7
(22) Anmeldetag: 20.01.2012
(51) Int. Cl.: B23Q 11/10

(54) **WERKZEUGREVOLVER ZUM BEARBEITEN VON WERKSTÜCKEN UND BEARBEITUNGSSYSTEM MIT EINEM DERARTIGEN WERKZEUGREVOLVER**
TOOL REVOLVER FOR MACHINING WORKPIECES AND A MACHINING SYSTEM COMPRISING SUCH A TOOL REVOLVER
TOURELLE PORTE-OUTILS POUR L'USINAGE DE PIÈCES ET SYSTÈME D'USINAGE ÉQUIPÉ D'UNE TELLE TOURELLE PORTE-OUTILS

(30) Priorität: 21.01.2011 DE 102011003005
(43) Veröffentlichungstag der Anmeldung: 27.11.2013
(73) Patentinhaber: MAG IAS GmbH, 73033 Göppingen (DE)
(72) Erfinder: MEIDAR, Moshe Israel, Miami,FL 33133 (US); LANG, Heiner, 73728 Esslingen (DE); HORN, Wolfgang, 73035 Göppingen (DE); HAUS, Waldemar, 71364 Winnenden (DE)
(74) Vertreter: Rau, Schneck & Hübner Patentanwälte Rechtsanwälte PartGmbB
(86) Internationale Anmeldenummer: PCT/EP2012/050859
(87) Internationale Veröffentlichungsnummer: WO 2012/098224

(56) Entgegenhaltungen:
- DE-A1- 3 702 424
- DE-A1- 19 735 420
- US-A- 5 509 335

## Beschreibung

Die Erfindung betrifft einen Werkzeugrevolver zum Bearbeiten von Werkstücken gemäß dem Oberbegriff des Anspruchs 1. Ferner betrifft die Erfindung ein Bearbeitungssystem mit einem derartigen Werkzeugrevolver. Das Bearbeitungssystem ist insbesondere Teil einer Werkzeugmaschine zum spanenden Bearbeiten von Werkstücken.

Aus der DE 601 11 162 T2 (entspricht EP 1 208 940 B1) ist eine Werkzeugmaschine mit einem Werkzeugrevolver zum spanenden Bearbeiten von metallischen Werkstücken bekannt. Durch den Werkzeugrevolver wird ein kryogenes Kühlmedium zu demjenigen Werkzeug geführt, das gerade in Eingriff mit dem zu bearbeitenden Werkstück ist. Hierzu weist der Werkzeugrevolver einen polymeren Rotor mit einem ersten thermischen Ausdehnungskoeffizienten und einen zugehörigen metallischen Stator mit einem zweiten thermischen Ausdehnungskoeffizienten auf. Durch den Stator verläuft eine erste Zuführleitung, die einen konzentrisch zu der Drehachse des Rotors verlaufenden ersten Leitungsabschnitt und einen radial zu der Drehachse verlaufenden zweiten Leitungsabschnitt aufweist. Die erste Zuführleitung ist in der Arbeitsstellung des jeweiligen Werkzeuges mit einer zugehörigen zweiten Zuführleitung verbunden, die durch den den Stator umgebenden Rotor zu dem Werkzeug verläuft. Durch die unterschiedlichen thermischen Ausdehnungskoeffizienten werden die Zuführleitungen an der Verbindungsstelle selbsttätig abgedichtet, wenn das kryogene Kühlmedium durch die Zuführleitungen zu dem jeweiligen Werkzeug strömt. Nachteilig bei diesem Werkzeugrevolver ist, dass die Verbindungsstelle zwischen den Zuführleitungen nur schwierig abzudichten ist, da der Stator zum Abdichten der Verbindungsstelle einerseits aufgrund der unterschiedlichen Ausdehnungskoeffizienten mit einer ausreichenden Kraft gegen den Rotor gepresst werden muss, jedoch andererseits die Kraft nicht zu groß sein darf, da sich der Werkzeugrevolver ansonsten verklemmt und ein Werkzeugwechsel nicht mehr zuverlässig möglich ist. Dies ist insbesondere dann ein Problem, wenn ein kryogenes Kühlmedium bzw. unterschiedliche kryogene Kühlmedien bei unterschiedlichen Temperaturen zum Einsatz kommen, da das Ausdehnungsverhalten des Stators und des Rotors dementsprechend unterschiedlich sind.

Aus der US 5,509,335 A ist ein Bearbeitungszentrum bekannt, das in einer abgedichteten Kammer eine Werkzeugmaschine sowie ein Handhabungsgerät und ein kryogenes Verteilernetzwerk aufweist. Die Werkzeugmaschine weist einen Werkzeugrevolver auf, zu dem ausgehend von einem Versorgungstank flüssiger Stickstoff über eine flexible Leitung geführt ist. Das freie Ende der Leitung ist mit einem pneumatisch betätigten Zylinder verbunden, mittels dem das freie Ende verlagerbar und mit einem zugehörigen Anschluss eines Werkzeughalters verbindbar ist.

Die DE 37 02 424 A1 offenbart einen Werkzeugrevolver, bei dem durch ein Innengehäuse ein Kühlmittelzufuhrrohr koaxial zu der Revolverachse verläuft. Das Kühlmittelzufuhrrohr steht mit Kühlkanälen in der Werkzeugscheibe des Werkzeugrevolvers in Verbindung.

Aus der DE 197 35 420 A1 ist ein Werkzeugrevolver bekannt, bei dem in einer Revolverscheibe Kühl- oder Schmiermittelleitungen angeordnet sind, die zu den einzelnen Werkzeugaufnahmen führen.

Der Erfindung liegt die Aufgabe zugrunde, einen Werkzeugrevolver zu schaffen, bei dem ein kryogenes Kühlmedium in einfacher und zuverlässiger Weise zu den Werkzeugen zuführbar ist.

Diese Aufgabe wird durch einen Werkzeugrevolver mit den Merkmalen des Anspruchs 1 gelöst. Dadurch, dass die erste Zuführleitung mittels der Hubeinheit zumindest abschnittsweise parallel zu der Drehachse verlagerbar ist, ist einerseits ein einfaches und zuverlässiges Übertragen des kryogenen Kühlmediums bis zu dem in Eingriff mit dem zu bearbeitenden Werkstück befindlichen Werkzeug und andererseits ein einfacher und zuverlässiger Werkzeugwechsel möglich. Die erste Zuführleitung ist in ihrer ersten Stellung mit derjenigen zweiten Zuführleitung dichtend verbunden, deren zugehöriges Werkzeug gerade in der Arbeitsstellung zum Bearbeiten des Werkstücks ist. Das kryogene Kühlmedium kann dementsprechend einfach und zuverlässig zu dem Werkzeug übertragen werden. Zum Werkzeugwechsel wird die erste Zuführleitung mittels der Hubeinheit in ihre zweite Stellung verlagert, in der die erste Zuführleitung von den zweiten Zuführleitungen getrennt ist. In der zweiten Stellung kann die Drehstellung des Drehteils mit den Werkzeughaltern somit einfach und zuverlässig für einen Werkzeugwechsel verändert werden. Nach dem Werkzeugwechsel wird die erste Zuführleitung erneut mittels der Hubeinheit in die erste Stellung verlagert, in der diese mit der zweiten Zuführleitung des in der Arbeitsstellung befindlichen neuen Werkzeuges dichtend verbunden ist.

Der erfindungsgemäße Werkzeugrevolver ermöglicht insbesondere ein einfaches und zuverlässiges Zuführen eines kryogenen Kühlmediums unabhängig von dessen Temperatur. Das kryogene Kühlmedium weist beim Austritt aus dem jeweiligen Werkzeug eine Temperatur von weniger als -60° C, insbesondere von weniger als -120° C, insbesondere von weniger als -150° C, und insbesondere von weniger -180° C auf. Als kryogenes Kühlmedium kann beispielsweise flüssiger oder gasförmiger Stickstoff, flüssiger oder gasförmiger Sauerstoff, gasförmiger Wasserstoff, gasförmiges Helium, flüssiges oder gasförmiges Argon, gasförmiges Kohlendioxid und flüssiges oder gasförmiges Erdgas dienen. Vorzugsweise wird Stickstoff durch die Zuführleitungen zu den Werkzeugen geführt. Darüber hinaus kann - falls erforderlich - auch ein übliches Kühlschmiermittel durch den Werkzeugrevolver zu dem jeweiligen Werkzeug zugeführt werden.

Dadurch, dass das kryogene Kühlmedium bis unmittelbar zu den Schneiden der Werkzeuge zugeführt wird und diese aufgrund der äußerst geringen Temperatur des kryogenen Kühlmediums effektiver gekühlt werden als bei herkömmlichen Kühlschmiermitteln, sind höhere Schnittgeschwindigkeiten bei der Werkstückbearbeitung möglich. Das kryogene Kühlmedium wirkt sich zudem positiv auf die Standzeiten der Werkzeuge aus. Die Produktivität und Wirtschaftlichkeit der Werkstückbearbeitung kann dementsprechend durch das Zuführen des kryogenen Kühlmediums zu den Schneiden der Werkzeuge erhöht werden. Da das kryogene Kühlmedium verdampft, werden weder die bearbeiteten Werkstücke noch der Werkzeugrevolver bzw. die gesamte Werkzeugmaschine verschmutzt. Eine Entsorgung des kryogenen Kühlmediums, wie dies bei herkömmlichen Kühlschmiermitteln erforderlich ist, entfällt, wodurch die Wirtschaftlichkeit der Werkstückbearbeitung nochmals verbessert wird.

Die zumindest abschnittweise vakuumisolierte Ausbildung der ersten Zuführleitung gewährleistet auf einfache Weise, dass sich das kryogene Kühlmedium auf dem Weg zu den Werkzeugen nicht unerwünscht erwärmt und sich die die erste Zuführleitung umgebenden Bauteile des Werkzeugrevolvers nicht unzulässig abkühlen. Auf diese Weise können die Werkzeuge äußerst effektiv gekühlt und gleichzeitig thermische Spannungen in den die erste Zuführleitung umgebenden Bauteilen vermieden werden. Vorzugsweise ist die erste Zuführleitung vollständig, also über die gesamte Länge thermisch isolierend ausgebildet. Die Zuführleitung weist ein inneres Rohr und ein dieses umgebendes äußeres Rohr auf, die endseitig miteinander verbunden sind. Der von den Rohren begrenzte Isolationsraum ist evakuiert, wodurch die Zuführleitung eine äußerst geringe spezifische Wärmeleitfähigkeit aufweist. Die erste Zuführleitung weist insbesondere eine spezifische Wärmeleitfähigkeit bei 0° C von höchstens 0,40 W/(mK), insbesondere von höchstens 0,30 W/(mK), insbesondere von höchstens 0,20 W/(mK), und insbesondere von höchstens 0,01 W/(mK) auf. Vorzugsweise sind auch die zweiten Zuführleitungen jeweils zumindest abschnittsweise thermisch isolierend und insbesondere vakuumisoliert ausgebildet. Die Ausführungen zu der ersten Zuführleitung gelten dann für die zweiten Zuführleitungen entsprechend.

Die veränderbare Länge mindestens eines der Rohre ermöglicht einen Ausgleich der unterschiedlichen Längenänderungen des inneren und des äußeren Rohrs. Wird die erste Zuführleitung von dem kryogenen Kühlmedium durchströmt, nimmt das innere Rohr im Wesentlichen dessen Temperatur an, wohingegen sich das äußere Rohr aufgrund des zwischen beiden Rohren angeordneten Isolationsmediums deutlich weniger abkühlt. Das innere Rohr ändert seine Länge dementsprechend deutlich mehr als das äußere Rohr. Um eine Beschädigung der ersten Zuführleitung zu vermeiden, ist mindestens eines der Rohre in seiner Länge veränderbar. Vorzugsweise weist das äußere Rohr einen mäanderförmigen Metallbalg zum thermischen Längenausgleich auf. Insbesondere können auch die zweiten Zuführleitungen jeweils ein inneres Rohr und ein dieses umgebendes äußeres Rohr aufweisen, wobei mindestens eines dieser Rohre in seiner Länge veränderbar ist. Die Ausführungen zu der ersten Zuführleitung gelten bei derartig ausgebildeten zweiten Zuführleitungen entsprechend.

Ein Werkzeugrevolver nach Anspruch 2 gewährleistet eine hohe thermische Isolation der zweiten Zuführleitungen, um eine unerwünschte Erwärmung des kryogenen Kühlmediums auf dem Weg zu den Werkzeugen zu vermeiden. Vorzugsweise sind die zweiten Zuführleitungen jeweils vollständig, also über die gesamte Länge thermisch isolierend ausgebildet. Ansonsten gelten die Ausführungen zu der ersten Zuführleitung entsprechend.

Ein Werkzeugrevolver nach Anspruch 3 ermöglicht auf einfache Weise ein Verbinden und Trennen der Zuführleitungen zum Übertragen des kryogenen Kühlmediums und zum Werkzeugwechsel. Zum Verbinden der Zuführleitungen wird die erste Zuführleitung mittels der doppelt wirkenden Kolben-Zylinder-Einheit in einer ersten Richtung linear verlagert, wohingegen die erste Zuführleitung zum Werkzeugwechsel mittels der Kolben-Zylinder-Einheit in einer entgegengesetzt gerichteten zweiten Richtung linear verlagert wird. Vorzugsweise ist die Kolben-Zylinder-Einheit pneumatisch oder hydraulisch betätigbar. Die jeweilige Stellung der Kolben-Zylinder-Einheit wird vorzugsweise mittels mindestens eines Sensors detektiert.

Ein Werkzeugrevolver nach Anspruch 4 gewährleistet ein einfaches und zuverlässiges Verbinden der Zuführleitungen. Durch die trichterförmige Ausbildung kann die erste Zuführleitung auf einfache Weise in die zweite Zuführleitung eingeführt und an der Verbindungsstelle abgedichtet werden. Hierzu kann sich beispielsweise nach dem trichterförmigen Endabschnitt eine Dichtung in die jeweilige zweite Zuführleitung erstrecken, durch die die erste Zuführleitung eingeführt wird. Weiterhin kann der trichterförmige Endabschnitt selbst als Dichtung ausgebildet sein. Die Dichtungen weisen insbesondere eine hohe Beständigkeit gegenüber dem kryogenen Kühlmedium auf. Vorzugsweise sind die Dichtungen aus einem Kunststoffmaterial bzw. Gummimaterial, dass eine hohe chemische Beständigkeit und gute thermische Isolationseigenschaften aufweist. Vorzugsweise sind die Dichtungen aus PTFE (Polytetrafluorethylen).

Ein Werkzeugrevolver nach Anspruch 5 gewährleistet ein einfaches Zuführen des kryogenen Kühlmediums. Dadurch, dass die erste Zuführleitung beabstandet zu der Drehachse, also vorzugsweise außerhalb des Gehäuses angeordnet ist, können die zweiten Zuführleitungen äußerst kurz ausgebildet werden.

Ein Werkzeugrevolver nach Anspruch 6 gewährleistet ein einfaches und zuverlässiges Zuführen des kryogenen Kühlmediums zu den Werkzeugen. Dadurch, dass der jeweilige erste Leitungsabschnitt parallel zu der Drehachse verläuft, ist die erste Zuführleitung durch ein einfaches lineares Verlagern mit der jeweiligen zweiten Zuführleitung verbindbar. Da der jeweilige zweite Leitungsabschnitt quer bzw. radial zu der Drehachse verläuft, wird das kryogene Kühlmedium direkt bis zu den Schneiden der Werkzeuge geführt.

Ein Werkzeugrevolver nach Anspruch 7 gewährleistet ein einfaches und zuverlässiges Zuführen des kryogenen Kühlmediums zu den Werkzeugen. Aufgrund der Ausbildung der ersten Zuführleitung wird lediglich der zweite Leitungsabschnitt mittels der Hubeinheit quer bzw. radial zu der Drehachse verlagert. Der konzentrisch zu der Drehachse verlaufende erste Leitungsabschnitt ist in axialer Richtung fest angeordnet. Da weder der erste Leitungsabschnitt noch der zweite Leitungsabschnitt in dem Drehteil ausgebildet sind, sind diese auch bei einer Drehung des Drehteils feststehend. Durch die Anordnung der ersten Zuführleitung ist der Aufbau des Werkzeugrevolvers äußerst kompakt.

Ein Werkzeugrevolver nach Anspruch 8 gewährleistet ein einfaches und zuverlässiges Zuführen des kryogenen Kühlmediums durch die zweiten Zuführleitungen. Dadurch, dass die zweiten Zuführleitungen jeweils ausschließlich quer bzw. radial zu der Drehachse verlaufen, kann das kryogene Kühlmedium direkt zu den Schneiden der Werkzeuge geführt werden. Die zweiten Zuführleitungen führen zu dem jeweiligen Werkzeughalter bzw. durch den jeweiligen Werkzeughalter, um das darin aufgenommene Werkzeug mit dem kryogenen Kühlmittel zu versorgen.

Ein Werkzeugrevolver nach Anspruch 9 gewährleistet auf einfache und zuverlässige Weise ein Kühlen von drehantreibbaren Werkzeugen. Der mittels des Antriebsmotors drehantreibbare Werkzeughalter wird um die zugehörige zweite Zuführleitung drehangetrieben, die konzentrisch zu der Werkzeug-Drehachse angeordnet ist und nicht mit dem Werkzeughalter um die Werkzeug-Drehachse rotiert. Das Werkzeug kann mittels des Werkzeughalters somit um die zugehörige Werkzeug-Drehachse drehangetrieben werden und gleichzeitig kann in einfacher und zuverlässiger Weise das kryogene Kühlmedium zu der Schneide des drehangetriebenen Werkzeugs zugeführt werden. Als drehantreibbares Werkzeug kann beispielsweise ein Bohrer in den Werkzeughalter eingesetzt sein, der zusammen mit dem Bohrer drehangetrieben wird. Weiterhin können in den Werkzeughalter auch Werkzeuge eingesetzt sein, die nicht drehangetrieben werden. Beispielsweise kann in den Werkzeughalter als Werkzeug ein Drehmeisel eingesetzt sein, der während der Bearbeitung mittels der Antriebseinheit nicht drehangetrieben wird, also um die Werkzeug-Drehachse feststeht.

Ein Werkzeugrevolver nach Anspruch 10 gewährleistet ein zuverlässiges Zuführen des kryogenen Kühlmediums, da die jeweilige zweite Zuführleitung nicht um die Werkzeug-Drehachse rotiert und entsprechend der ersten Zuführleitung um die Werkzeug-Drehachse feststehend angeordnet ist.

Der Erfindung liegt ferner die Aufgabe zugrunde, ein Bearbeitungssystem zu schaffen, dass ein einfaches und zuverlässiges Zuführen des kryogenen Kühlmediums zu den Werkzeugen ermöglicht.

Diese Aufgabe wird durch ein Bearbeitungssystem mit den Merkmalen des Anspruchs 11 gelöst. Die Vorteile des erfindungsgemäßen Bearbeitungssystems entsprechend den bereits beschriebenen Vorteilen des erfindungsgemäßen Werkzeugrevolvers. Aus dem thermisch isolierten Speicher wird das kryogene Kühlmedium über die thermisch isolierte Versorgungsleitung dem Werkzeugrevolver zugeführt. Um die Temperatur des gespeicherten kryogenen Kühlmediums konstant zu halten, ist ein Kühlaggregat vorgesehen. Weiterhin weist das Bearbeitungssystem eine Förderpumpe auf, um das kryogene Kühlmedium aus dem Speicher zu dem Werkzeugrevolver zu fördern. Für den Werkzeugwechsel weist das Bearbeitungssystem zusätzlich ein Absperrventil auf, das die Zufuhr des kryogenen Kühlmediums zu dem Werkzeugrevolver vor einem Werkzeugwechsel unterbricht. Das Kühlaggregat und/oder die Förderpumpe und/oder das Absperrventil sind mittels einer Steuereinrichtung ansteuerbar. Das Bearbeitungssystem ist Teil einer ansonsten üblichen Werkzeugmaschine zum spanenden Bearbeiten von metallischen Werkstücken, insbesondere von wellenförmigen Werkstücken.

Weitere Merkmale, Vorteile und Einzelheiten der Erfindung ergeben sich aus der nachfolgenden Beschreibung mehrerer Ausführungsbeispiele. Es zeigen:
- Fig. 1: eine schematische Darstellung eines Bearbeitungssystems zum Bearbeiten von Werkstücken unter Zuführung eines kryogenen Kühlmediums gemäß einem ersten Ausführungsbeispiel,
- Fig. 2: eine teilweise geschnittene Seitenansicht durch einen Werkzeugrevolver des Bearbeitungssystems in Fig. 1 in einer Betriebstellung zum Zuführen des kryogenen Kühlmediums,
- Fig. 3: eine vergrößerte Darstellung des Werkzeugrevolvers in Fig. 2 im Bereich einer Hubeinheit zum Verlagern einer ersten Zuführleitung für das kryogene Kühlmedium,
- Fig. 4: eine vergrößerte Darstellung des Werkzeugrevolvers in Fig. 2 im Bereich einer Verbindungsstelle zwischen der ersten Zuführleitung und einer zweiten Zuführleitung zum Zuführen des kryogenen Kühlmediums zu dem in der Arbeitsstellung befindlichen Werkzeug,
- Fig. 5: eine teilweise geschnittene Seitenansicht durch den Werkzeugrevolver in einer Werkzeugwechselstellung,
- Fig. 6: eine vergrößerte Darstellung des Werkzeugrevolvers in Fig. 5 im Bereich der getrennten Zuführleitungen,
- Fig. 7: eine teilweise geschnittene Seitenansicht eines Werkzeugrevolvers gemäß einem zweiten Ausführungsbeispiel in einer Betriebstellung zum Zuführen des kryogenen Kühlmediums,
- Fig. 8: eine vergrößerte Darstellung des Werkzeugrevolvers in Fig. 7 im Bereich der Verbindungsstelle zwischen der ersten Zuführleitung und der zu dem in der Arbeitsstellung befindlichen Werkzeug gehörigen zweiten Zuführleitung,
- Fig. 9: eine teilweise geschnittene Frontalansicht auf den Werkzeugrevolver in Fig. 7,
- Fig. 10: eine vergrößerte Darstellung des Werkzeugrevolvers in Fig. 9 im Bereich der Verbindungsstelle, und
- Fig. 11: eine teilweise geschnittene und vergrößerte Seitenansicht des in einer Werkzeugwechselstellungen befindlichen Werkzeugrevolvers im Bereich der getrennten Zuführleitungen.

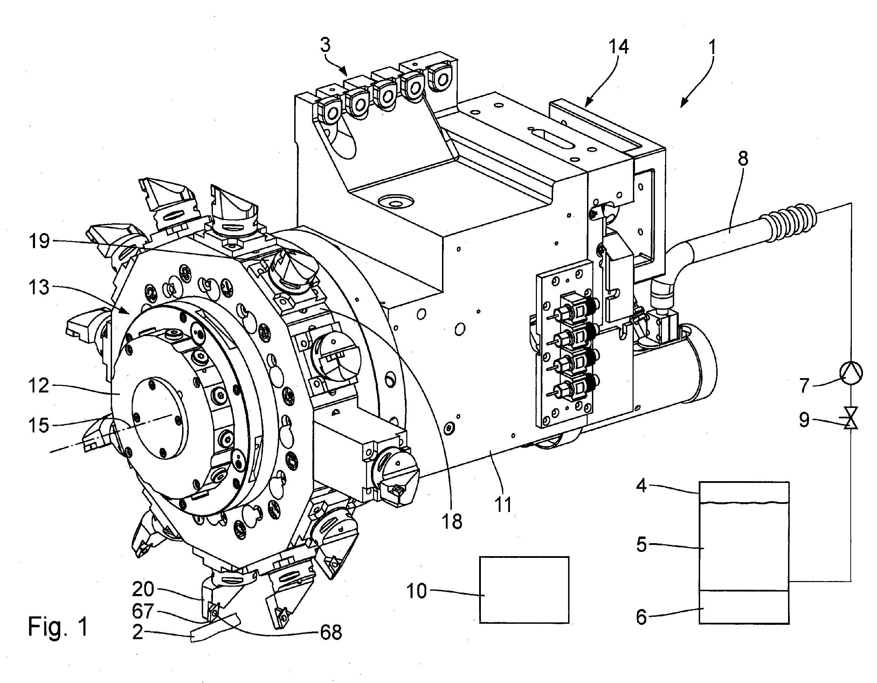

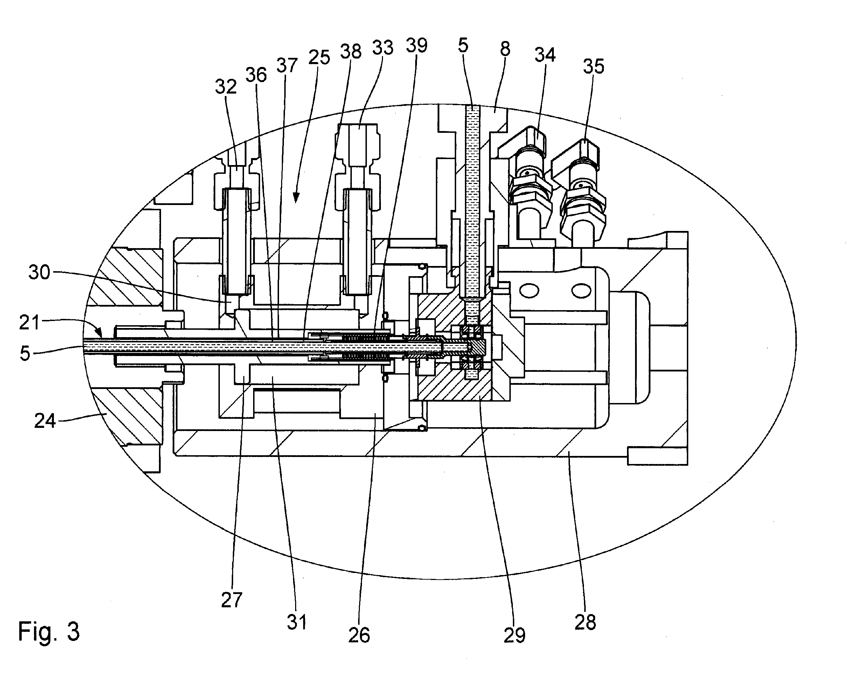

Nachfolgend ist unter Bezugnahme auf die Fig. 1 bis 6 ein erstes Ausführungsbeispiel der Erfindung beschrieben. Eine nicht näher dargestellte Werkzeugmaschine weist ein Bearbeitungssystem 1 zur spanenden Bearbeitung von metallischen Werkstücken 2 auf, das einen Werkzeugrevolver 3, einen thermisch isolierten Speicher 4 zum Bereitstellen eines kryogenen Kühlmediums 5, ein Kühlaggregat 6 zum Kühlen des kryogenen Kühlmediums 5, eine Förderpumpe 7, eine Versorgungsleitung 8 mit einem zugehörigen Absperrventil 9 und eine Steuereinrichtung 10 umfasst. Die Versorgungsleitung 8 ist mit dem Speicher 4 und dem Werkzeugrevolver 3 verbunden und thermisch isoliert. Der Werkzeugrevolver 3, das Kühlaggregat 6, die Förderpumpe 7 und das Absperrventil 9 sind mittels der Steuereinrichtung 10 ansteuerbar. Der über das Bearbeitungssystem 1 hinausgehende Aufbau der Werkzeugmaschine ist üblich und bekannt.

Der Werkzeugrevolver 3 weist ein Gehäuse 11 auf, in dem eine feststehende Zentralwelle 12 gelagert ist. Die Zentralwelle 12 ist endseitig aus dem Gehäuse 11 herausgeführt und dient zur Lagerung eines Drehteils 13, das mittels einer an dem Gehäuse 11 angeordneten Antriebseinheit 14 um eine Drehachse 15 drehantreibbar ist. Die Antriebseinheit 14 umfasst einen elektrischen Antriebsmotor 16, der über eine nicht im Detail dargestellte Übertragungsmechanik 17 in üblicher Weise mit dem Drehteil 13 zusammenwirkt, um dieses um die Drehachse 15 drehanzutreiben.

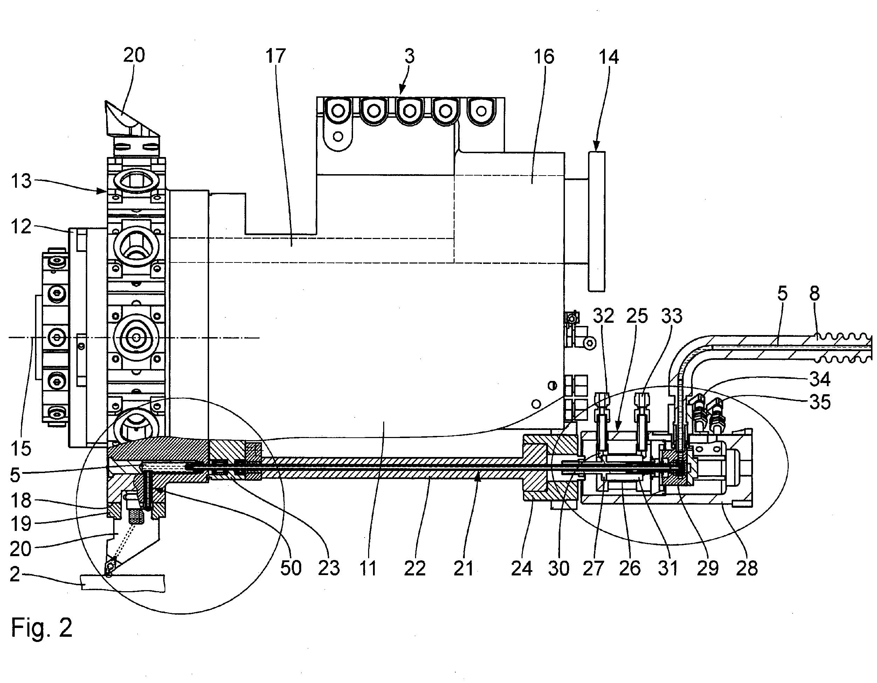

Das Drehteil 13 ist ringförmig ausgebildet und konzentrisch zu der Drehachse 15 auf der Zentralwelle 12 gelagert. Das Drehteil 13 weist eine polygonförmige Außenkontur auf, durch die umfangsseitig angeordnete Lagerflächen 18 gebildet werden. An den Lagerflächen 18 sind Werkzeughalter 19 angeordnet, in denen die Werkzeuge 20 aufgenommen und mittels einer üblichen Sicherungsmechanik gesichert sind. Das Drehteil 13 ist mittels der Antriebseinheit 14 in mehrere definierte Drehstellungen verschwenkbar, in denen sich jeweils eines der Werkzeuge 20 in einer Arbeitsstellung befindet, in der es dem zu bearbeitenden Werkstück 2 zugewandt ist. In Fig. 2 ist das in der Arbeitsstellung befindliche untere Werkzeug 20 geschnitten dargestellt. Der vollständig mit Werkzeugen 20 bestückte Werkzeugrevolver 3 ist lediglich in Fig. 1 dargestellt. Aus Gründen der Übersichtlichkeit wurden in den Fig. 2 bis 6 nicht alle Werkzeuge 20 dargestellt.

Zum Zuführen des kryogenen Kühlmediums 5 von der Versorgungsleitung 8 zu den Werkzeugen 20 weist der Werkzeugrevolver 3 eine erste Zuführleitung 21 auf, die thermisch isolierend ausgebildet ist. Die erste Zuführleitung 21 ist parallel und beabstandet zu der Drehachse 15 außerhalb des Gehäuses 11 angeordnet. Hierzu ist die Zuführleitung 21 von einem Schutzrohr 22 umgeben, das endseitig an den Befestigungsabschnitten 23, 24 des Gehäuses 11 befestigt ist. Die Zuführleitung 21 ist durch diese Befestigungsabschnitte 23, 24 geführt. Die Zuführleitung 21 wird auch als Lanze bezeichnet.

Die Zuführleitung 21 ist mittels einer Hubeinheit 25 parallel zu der Drehachse 15 linear verlagerbar. Hierzu ist die Hubeinheit 25 als doppelt wirkende Kolben-Zylinder-Einheit mit einem Zylinder 26 und einem darin geführten Kolben 27 ausgebildet. Die Kolben-Zylinder-Einheit 25 ist in einem Anschlussgehäuse 28 angeordnet, das an dem Befestigungsabschnitt 24 befestigt ist. Die Versorgungsleitung 8 ist in das Anschlussgehäuse 28 geführt und mittels einer Anschlusseinheit 29 mit der ersten Zuführleitung 21 verbunden. Zum Verlagern der Zuführleitung 21 ist diese durch den Kolben 27 geführt und mit diesem verbunden. Der Kolben 27 teilt den Arbeitsraum der Kolben-Zylinder-Einheit 25 in zwei Teil-Arbeitsräume 30, 31, die zum Zuführen eines Druckmediums jeweils mit einem Anschluss 32, 33 in Verbindung sind. Auf diese Weise sind beide Teil-Arbeitsräume 30, 31 mit dem Druckmedium befüllbar und somit der Kolben 27 in beiden Richtungen axial verlagerbar. An dem Anschlussgehäuse 28 sind ferner zwei als Induktionsschalter 34, 35 ausgebildete Sensoren angeordnet, mittels denen die Stellung der Kolben-Zylinder-Einheit 25 detektierbar ist. Die Kolben-Zylinder-Einheit 25 ist beispielweise pneumatisch oder hydraulisch betätigbar.

Zur Vermeidung einer unerwünschten Erwärmung des kryogenen Kühlmediums 5 in der ersten Zuführleitung 21 ist diese vakuumisoliert ausgebildet. Hierzu weist die Zuführleitung 21 ein inneres Rohr 36 und ein dieses umgebendes äußeres Rohr 37 auf, die endseitig miteinander verbunden sind und zwischen sich einen Isolationsraum 38 begrenzen. Der Isolationsraum 38 ist evakuiert, sodass die Zuführleitung 21 eine äußerst niedrige spezifische Wärmeleitfähigkeit aufweist. In das äußere Rohr 37 ist ein mäanderförmig ausgebildeter Metallbalg 39 integriert, sodass das äußere Rohr 37 in seiner Länger veränderbar ist. Der Metallbalg 39 dient zum Ausgleich unterschiedlicher Längenänderungen der Rohre 36, 37 infolge des kryogenen Kühlmediums 5.

Zum Verlagern ist die erste Zuführleitung 21 in dem der Kolben-Zylinder-Einheit 25 gegenüberliegenden Befestigungsabschnitt 23 axial verschiebbar gelagert. Hierzu sind in dem Befestigungsabschnitt 23 gegenüberliegende Bohrungen 40, 41 ausgebildet, in denen jeweils zwei Dichtungen 42 bis 45 angeordnet sind, die mittels zugehörigen Distanzhülsen 46, 47 axial beabstandet sind. Zwischen dem Schutzrohr 22 und dem Befestigungsabschnitt 23 ist außerdem ein Verbindungselement 48 mit einer Gleithülse 49 angeordnet, durch die die erste Zuführleitung 21 geführt ist. Das Verbindungselement 48 ist an dem Befestigungsabschnitt 23 und dem Schutzrohr 22 befestigt. Die Dichtungen 42 bis 45 sind aus einem chemisch beständigen und thermisch isolierenden Material ausgebildet. Als Material dient beispielsweise PTFE (Polytetrafluorethylen). Entsprechend sind auch die Distanzhülsen 46, 47 und die Gleithülse 49 aus einem chemisch beständigen und thermisch isolierenden Material ausgebildet, wie beispielsweise aus PTFE.

In dem Drehteil 13 sind mehrere zweite Zuführleitungen 50 ausgebildet, die von einer der ersten Zuführleitung 21 zugewandten Stirnseite 51 des Drehteils 13 zu den Werkzeughaltern 19 führen. Die zweiten Zuführleitungen 50 weisen jeweils einen parallel zu der Drehachse 15 verlaufenden ersten Leitungsabschnitt 52 und einen quer bzw. radial zu der Drehachse 15 verlaufenden zweiten Leitungsabschnitt 53 auf. Die ersten Leitungsabschnitte 52 werden jeweils durch zwei Einsatzteile 54, 55 gebildet, die in eine konzentrisch zu der ersten Zuführleitung 21 in dem Drehteil 13 ausgebildete Durchgangsbohrung 56 eingesetzt sind. Die jeweilige Durchgangsbohrung 56 verjüngt sich in Richtung der ersten Zuführleitung 21 stufenförmig, sodass das erste Einsatzteil 54 benachbart zu einer jeweiligen Einführöffnung 57 für die Zuführleitung 21 in der Durchgangsbohrung 56 festgelegt ist. An einer der ersten Zuführleitung 21 abgewandten Seite des ersten Einsatzteils 54 ist eine ringförmige Dichtung 58 angeordnet, die durch das in die Durchgangsbohrung 56 eingeführte zweite Einsatzteil 55 zwischen den beiden Einsatzteilen 54, 55 festgelegt ist. Das zweite Einsatzteil 55 ist durch die stufenförmige Ausbildung der Durchgangsbohrung 56 in Richtung der ersten Zuführleitung 21 wiederum festgelegt.

Das erste Einsatzteil 54 ist ringförmig ausgebildet und verjüngt sich in Richtung des zweiten Einsatzteils 55 trichterförmig, sodass die erste Zuführleitung 21 in einfacher Weise durch die Dichtung 58 einführbar ist. In dem zweiten Einsatzteil 55 ist an einer der ersten Zuführleitung 21 zugewandten Seite ein Sackloch 59 ausgebildet, das zusammen mit dem ersten Einsatzteil 54 und der Dichtung 58 den ersten Leitungsabschnitt 52 bildet. Zur Ausrichtung des ersten Leitungsabschnitts 52 relativ zu der ersten Zuführleitung 21 ist an dem Befestigungsabschnitt 23 ein Führungsvorsprung 60 ausgebildet, der in eine gegenüberliegend an dem Drehteil 13 ausgebildete Führungsnut 61 eingreift. Die Führungsnut 61 ist ringförmig ausgebildet und konzentrisch zu der Drehachse 15 an der Stirnseite 51 ausgebildet. Die Einsatzteile 54, 55 sowie die Dichtung 58 sind aus einem chemisch beständigen und thermisch isolierenden Material. Als Material eignet sich beispielsweise PTFE.

Der jeweilige zweite Leitungsabschnitt 53 ist vakuumisoliert ausgebildet und weist entsprechend der ersten Zuführleitung 21 ein inneres Rohr 62 und ein dieses umgebendes äußeres Rohr 63 auf, die endseitig miteinander verbunden sind und zwischen sich einen Isolationsraum 64 begrenzen. Der Isolationsraum 64 ist evakuiert, wodurch die zweiten Leitungsabschnitte 53 jeweils eine äußerst geringe spezifische Wärmeleitfähigkeit aufweisen. Die zweiten Leitungsabschnitte 53 können entsprechend der ersten Zuführleitung 21 einen Ausgleich der unterschiedlichen Längenausdehnung der Rohre 62, 63 ermöglichen. Die zweiten Leitungsabschnitte 53 führen jeweils von dem zugehörigen Sackloch 59 in radialer Richtung zu den zugehörigen Werkzeughaltern 19 bzw. Werkzeugen 20. Die Werkzeuge 20 weisen jeweils einen Aufnahmeraum 65 für das kryogene Kühlmedium 5 auf, in den der jeweilige zweite Leitungsabschnitt 53 mündet. Von dem jeweiligen Aufnahmeraum 65 führt ein Kühlkanal 66 durch das Werkzeug 20 bis zu der Werkzeugschneide 67, an der das kryogene Kühlmedium 5 durch eine Austrittsöffnung 68 austreten kann.

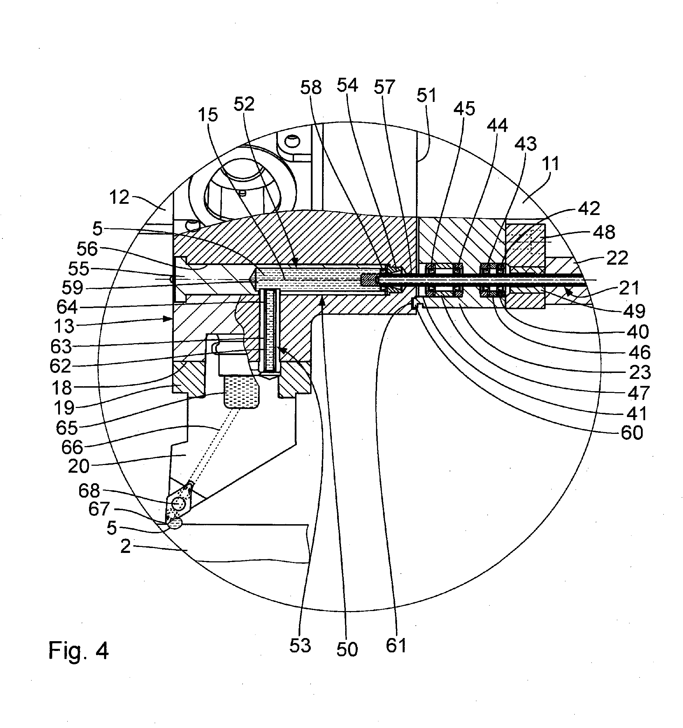

Nachfolgend ist die Bearbeitung eines Werkstücks 2 beschrieben. Die erste Zuführleitung 21 ist für die Bearbeitung mittels der Kolben-Zylinder-Einheit 25 derart in den ersten Leitungsabschnitt 52 des zu dem in der Arbeitsstellung befindlichen Werkzeugs 20 eingeführt, dass das kryogene Kühlmedium 5 aus der ersten Zuführleitung 21 in das Sackloch 59 eintritt. Diese erste Stellung der ersten Zuführleitung 21, die auch als Betriebstellung bezeichnet wird, ist in Fig. 4 gezeigt. In der Betriebstellung ist die erste Zuführleitung 21 mit der zu dem in der Arbeitsstellung befindlichen Werkzeug 20 gehörigen zweiten Zuführleitung 50 zum Übertragen des kryogenen Kühlmediums 5 zu der Werkzeugschneide 67 verbunden. Anschließend wird das Werkstück 2 in üblicher Weise drehangetrieben und mit dem Werkzeug 20 bearbeitet. Während der Bearbeitung wird das kryogene Kühlmedium 5 mittels der Förderpumpe 7 über die Zuführleitungen 21, 50 zu der Austrittsöffnung 68 gefördert, wo das kryogene Kühlmedium 5 unmittelbar an der Werkzeugschneide 67 austritt. Das kryogene Kühlmedium 5 ist beispielsweise flüssiger Stickstoff, der unterhalb seiner Verdampfungstemperatur in dem Speicher 4 bereit gestellt wird und mittels des Kühlaggregats 6 auf der gewünschten Temperatur gehalten wird. Zum Zuführen des kryogenen Kühlmediums ist das Absperrventil 9 geöffnet, sodass die Förderpumpe 7 das kryogene Kühlmedium 5 von dem Speicher 4 über die Versorgungsleitung 8 zu dem Werkzeugrevolver 3 fördern kann. Da die Zuführleitungen 21, 50 thermisch isolierend bzw. vakuumisoliert ausgebildet sind, erwärmt sich das kryogene Kühlmedium 5 beim Durchströmen der Zuführleitungen 21, 50 im Wesentlichen nicht. Das kryogene Kühlmedium 5 tritt durch die Austrittsöffnung 68 mit einer Temperatur von weniger als -180° C aus. Nach dem Austreten verdampft das kryogene Kühlmedium 5, sodass die Bearbeitung des Werkstücks 2 trocken erfolgt und das Werkstück 2 sowie die gesamte Werkzeugmaschine nicht verunreinigt werden.

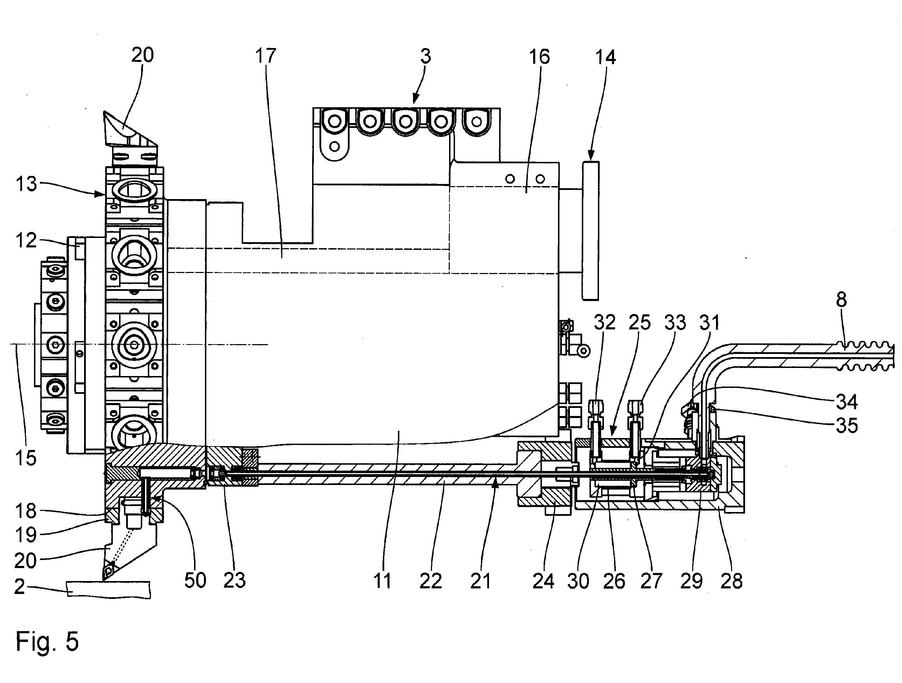

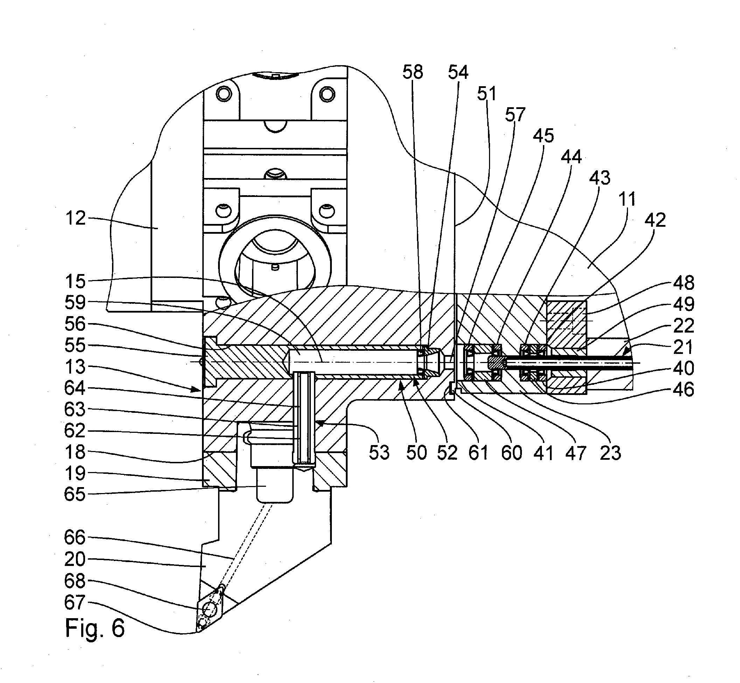

Zum Werkzeugwechsel wird die Zufuhr des kryogenen Kühlmediums 5 durch Abschalten der Förderpumpe 7 und Absperren des Absperrventils 9 unterbrochen. Anschließend wird die erste Zuführleitung 21 zusammen mit der Anschlusseinheit 29 und der damit verbundenen Versorgungsleitung 8 mittels der Kolben-Zylinder-Einheit 25 verlagert, sodass die erste Zuführleitung 21 aus dem ersten Leitungsabschnitt 52 entfernt wird. In dieser zweiten Stellung der ersten Zuführleitung 21 ist diese von allen zweiten Zuführleitungen 50 getrennt, sodass die Drehstellung des Drehteils 13 veränderbar ist. Diese zweite Stellung, die auch als Werkzeugwechselstellung bezeichnet wird, ist in den Fig. 5 und 6 gezeigt.

Zum Werkzeugwechsel wird das Drehteil 13 mittels der Antriebseinheit 14 um die Drehachse 15 in eine andere Drehstellung verschwenkt, sodass sich anschließend ein anderes Werkzeug 20 in der Arbeitsstellung befindet. Anschließend wird mittels der Kolben-Zylinder-Einheit 25 die erste Zuführleitung 21 wieder in den ersten Leitungsabschnitt 52 eingeführt, wobei das Einführen durch das trichterförmige Einsatzteil 54 erleichtert wird. Die erste Zuführleitung 21 befindet sich nun wieder in der Betriebstellung, sodass die Bearbeitung des Werkstücks 2 unter Zugabe des kryogenen Kühlmediums 5 fortgeführt werden kann.

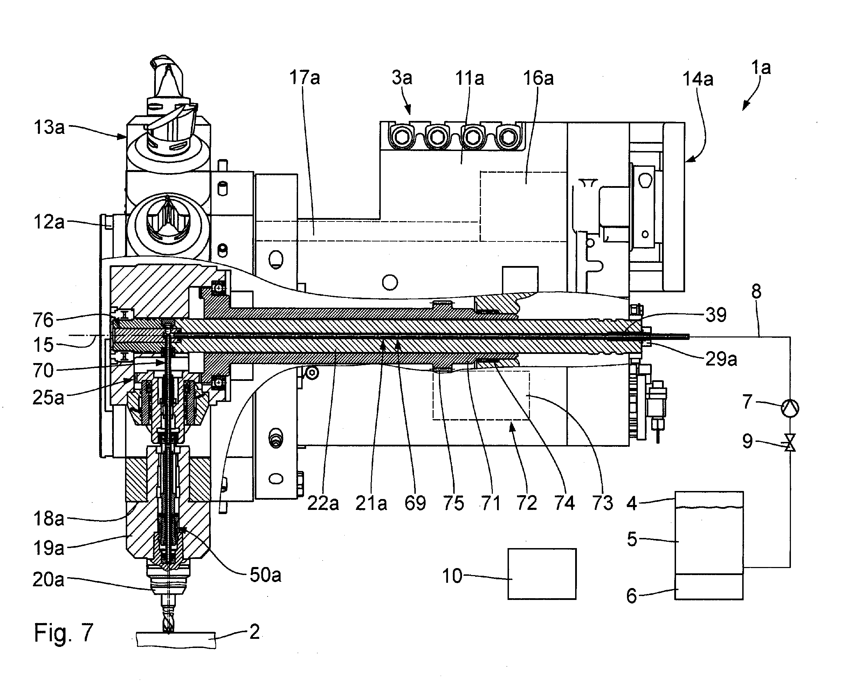

Nachfolgend ist unter Bezugnahme auf die Fig. 7 bis 11 ein zweites Ausführungsbeispiel der Erfindung beschrieben. Konstruktiv identische Teile erhalten dieselben Bezugszeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten a. Der Werkzeugrevolver 3a des Bearbeitungssystem 1a ist zum Drehantreiben von Werkzeugen 20a ausgebildet. Hierzu sind die Werkzeughalter 19a drehantreibbar, wobei in den Werkzeughaltern 19a sowohl Werkzeuge 20a eingesetzt werden können, die zur Bearbeitung drehangetrieben werden müssen, als auch Werkzeuge 20a eingesetzt werden können, die zur Bearbeitung nicht drehangetrieben werden, also feststehen müssen. In den Fig. 7 bis 11 befindet sich in der Arbeitsstellung ein Werkzeughalter 19a mit einem als Bohrer ausgebildeten Werkzeug 20a, das zur Bearbeitung des Werkstücks 2 drehangetrieben werden muss. In den weiteren Werkzeughaltern 19a befinden sich auch als Drehmeisel ausgebildete Werkzeuge 20a, die zur Bearbeitung des Werkstücks 2 feststehen müssen.

Die erste Zuführleitung 21a weist einen konzentrisch zu der Drehachse 15 angeordneten ersten Leitungsabschnitt 69 und einen quer bzw. radial zu der Drehachse 15 angeordneten zweiten Leitungsabschnitt 70 auf. Der erste Leitungsabschnitt 69 ist entsprechend der ersten Zuführleitung des ersten Ausführungsbeispiels vakuumisoliert ausgebildet. Der erste Leitungsabschnitt 69 ist von dem Schutzrohr 22a umgeben, das wiederum von einer Antriebswelle 71 umgeben ist, die Teil einer zweiten Antriebseinheit 72 mit einem zugehörigen Antriebsmotor 73 ist. Die Antriebswelle 71 ist an beiden Enden mittels Lagern 74 an dem Gehäuse 11a drehbar gelagert und mittels des Antriebsmotors 73 über eine erste Verzahnung 75 um die Drehachse 15 drehantreibbar. In axialer Richtung ist der erste Leitungsabschnitt 69 fest angeordnet.

Der erste Leitungsabschnitt 69 ist mittels einer Verbindungseinheit 76, die Teil der Zuführleitung 21a ist, mit dem zweiten Leitungsabschnitt 70 verbunden. Die Verbindungseinheit 76 umfasst eine Hülse 77, die in eine konzentrisch zu der Drehachse 15 in der Zentralwelle 12a ausgebildete Bohrung 78 eingeführt ist, in die sich auch das Schutzrohr 22a mit dem ersten Leitungsabschnitt 69 erstreckt. Die Hülse 77 ist in axialer Richtung beabstandet zu dem Schutzrohr 22a angeordnet, sodass ein Freiraum 79 ausgebildet ist. In die Hülse 77 ist ein zu der Verbindungseinheit 76 gehöriges Einsatzteil 80 eingesteckt, das sich bis zu dem Schutzrohr 22a erstreckt. Das Einsatzteil 80 weist an einer dem ersten Leitungsabschnitt 69 zugewandten Seite ein stufenförmig ausgebildetes Sackloch 81 auf, in dem endseitig eine ringförmige Dichtung 82 festgelegt ist, durch die der erste Leitungsabschnitt 69 teilweise in das Sackloch 81 eingeführt ist. Das Einsatzteil 80 weist weiterhin eine Durchgangsbohrung 83 auf, die in radialer Richtung durch den freien Teil des Sacklochs 81 führt und beidseitig in den Freiraum 79 mündet. An beiden Enden der Durchgangsbohrung 83 ist jeweils eine ringförmige Dichtung 84 angeordnet. Der zweite Leitungsabschnitt 70 ist durch die Dichtung 84 bzw. die Dichtungen 84 und die Durchgangsbohrung 83 geführt. Benachbart zu dem Ende des zweiten Leitungsabschnitts 70 ist in dem Freiraum 79 ein elastisches Pufferelement 85 angeordnet.

Der zweite Leitungsabschnitt 70 ist mittels der Hubeinheit 25a radial zu der Drehachse 15 linear verlagerbar. Die Hubeinheit 25a ist entsprechend dem ersten Ausführungsbeispiel als Kolben-Zylinder-Einheit ausgebildet. Der Zylinder 26a wird durch die Zentralwelle 12a und eine daran befestigte äußere Führungshülse 86 gebildet. In der äußeren Führungshülse 86 ist eine innere Führungshülse 87 gelagert, in der wiederum ein erstes Antriebsteil 88 angeordnet ist. Die innere Führungshülse 87 und das Antriebsteil 88 bilden den Kolben 27a. Die innere Führungshülse 87 ist in der äußeren Führungshülse 86 quer bzw. radial zu der Drehachse 15 mit einem begrenzten Hub linear verlagerbar. Hierzu unterteilt der Kolben 27a den Arbeitsraum in die beiden Teil-Arbeitsräume 30a, 31a. Die Teil-Arbeitsräume 30, 31a sind entsprechend dem ersten Ausführungsbeispiel über nicht näher dargestellte Anschlüsse mit einem Druckmedium befüllbar, sodass der Kolben 27a in beiden Richtungen verlagerbar ist. Das Antriebsteil 88 ist mittels eines Dichtlagers 89 um eine radial zu der Drehachse 15 verlaufende Werkzeug-Drehachse 90 drehbar in der inneren Führungshülse 87 gelagert. Zum Drehantreiben des Antriebsteils 88 weist die Antriebswelle 71 eine stirnseitig angeordnete zweite Verzahnung 91 auf, die durch Verlagern des Kolbens 27a in Eingriff mit einer umfangsseitig angeordneten Verzahnung 92 des Antriebsteils 88 bringbar ist.

Der zweite Leitungsabschnitt 70 ist durch eine Durchgangsbohrung 93 des Antriebsteils 88 geführt und mittels Lagerelementen 113, 114 derart mit diesem gekoppelt, dass der zweite Leitungsabschnitt 70 entlang der Werkzeug-Drehachse 90 mit dem Kolben 27a linear verlagerbar ist, jedoch bei einer Drehung des Antriebsteils 88 um die Werkzeug-Drehachse 90 feststeht. Hierzu sind die Lagerelemente 113, 114 als Gleitlager ausgebildet, die zusammen mit dem Antriebsteil 88 um den mittels der Verbindungseinheit 76 festgelegten zweiten Leitungsabschnitt 70 rotieren. Der zweite Leitungsabschnitt 70 ist entsprechend dem ersten Leitungsabschnitt 69 vakuumisoliert ausgebildet. Hierzu weist der zweite Leitungsabschnitt 70 ein inneres Rohr 94 auf, das von einem äußeren Rohr 95 umgeben ist. Die endseitig miteinander verbundenen Rohre 94, 95 begrenzen einen Isolationsraum 96, der evakuiert ist. Zum Ausgleich einer unterschiedlichen Längenausdehnung beider Rohre 94, 95 ist in das äußere Rohr 95 ein mäanderförmiger Metallbalg 97 integriert.

Zum Drehantreiben eines drehanzutreibenden Werkzeugs 20a um die zugehörige Werkzeug-Drehachse 90 sind in dem Drehteil 13a jeweilige zweite Antriebsteile 98 drehbar gelagert. Die Antriebsteile 98 bilden die Werkzeughalter 19a für die Werkzeuge 20a. Das jeweilige zweite Antriebsteil 98 weist eine Durchgangsbohrung 99 auf, in der die zweite Zuführleitung 50a konzentrisch zu der Werkzeug-Drehachse 90 gelagert ist. Hierzu ist die zweite Zuführleitung 50a teilweise von einem Schutzrohr 100 umgeben, das wiederum teilweise von einem ersten Einsatzteil 101 umgeben ist, das drehfest in die Durchgangsbohrung 99 teilweise eingeführt ist. An einem hervorspringenden Abschnitt des Einsatzteils 101 ist eine Außenverzahnung 102 angeordnet, die in Eingriff mit einer Innenverzahnung 103 des ersten Antriebsteils 88 bringbar ist. An einem dem zweiten Leitungsabschnitt 70 zugewandten Ende ist in das Einsatzteil 101 ein zweites Einsatzteil 104 eingeführt, mittels dem zwei ringförmige Dichtungen 105, 106 festgelegt sind. Das Einsatzteil 104 bildet einen Teil der zweiten Zuführleitung 50a. Die zweite Zuführleitung 50a ist derart in dem Antriebsteil 98 festgelegt, das diese entlang der Werkzeug-Drehachse 90 nicht verlagerbar ist, jedoch relativ zu dem Antriebsteil 98 drehbar gelagert ist.

Endseitig in der Durchgangsbohrung 99 ist mittels eines Spannelements 107 das Werkzeug 20a befestigt. Die zweite Zuführleitung 50a führt bis zu dem Aufnahmeraum 65a, in dem diese mittels zwei Lagerelementen 108, 109 und einer dazwischen angeordneten Dichtung 110 gelagert ist. Das Einsatzteil 104, das Schutzrohr 100 und die Lagerelemente 108, 110 sind als Gleitlager ausgebildet, um die der Werkzeughalter 19a mit dem Werkzeug 20a und das Einsatzteil 101 rotierbar sind. Von dem Aufnahmeraum 65a führt der Kühlkanal 66a zu der Werkzeugschneide 67a, wo das kryogene Kühlmedium 5 durch die Austrittsöffnung 68a austreten kann. Das Antriebsteil 98 bildet somit den drehantreibbaren Werkzeughalter 19a für das Werkzeug 20a aus.

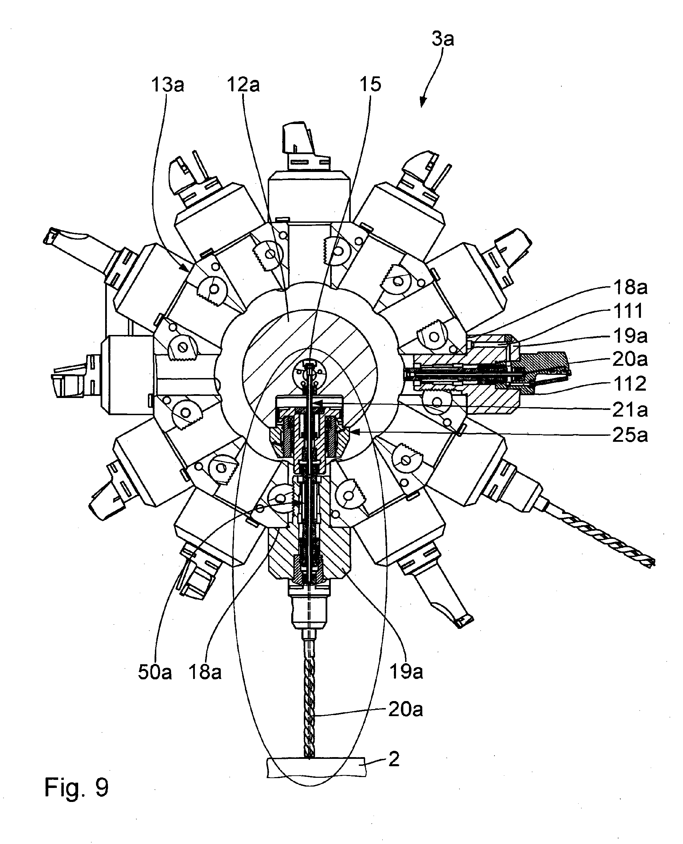

Zusätzlich können einzelne oder alle Antriebsteile 98 sowie die zugehörigen Werkzeuge 20a einen üblichen Kühlkanal 111, 112 für eine Minimalmengenschmierung aufweisen. Dies ist in Fig. 9 an einem einzelnen Antriebsteil 98 und dem zugehörigen Werkzeug 20a veranschaulicht. Derartige Werkzeughalter 19a können somit auch mit einem üblichen Werkzeugrevolver mit Minimalmengenschmierung betrieben werden.

Die zweite Zuführleitung 50a ist vakuumisoliert ausgebildet und weist entsprechend der ersten Zuführleitung 21a ein inneres Rohr 62 auf, das von einem äußeren Rohr 63 umgeben ist. Die Rohre 62, 63 sind endseitig miteinander verbunden und begrenzen zwischen sich einen evakuierten Isolationsraum 64. Zusätzlich kann das äußere Rohr 63 mit einem mäanderförmigen Metallbalg ausgebildet sein, der zum Ausgleich der unterschiedlichen Längenausdehnung der Rohre 62, 63 dient.

Die Verbindungseinheit 76, die Dichtungen 82, 84, das Pufferelement 85, die Einsatzteile 101, 104, das Schutzrohr 100, die Dichtungen 105, 106, 110 sowie die Lagerelemente 108, 109, 113, 114 sind aus einem gegenüber dem kryogenen Kühlmedium 5 chemisch beständigen und thermisch isolierenden Material ausgebildet. Als Material dient beispielsweise PTFE.

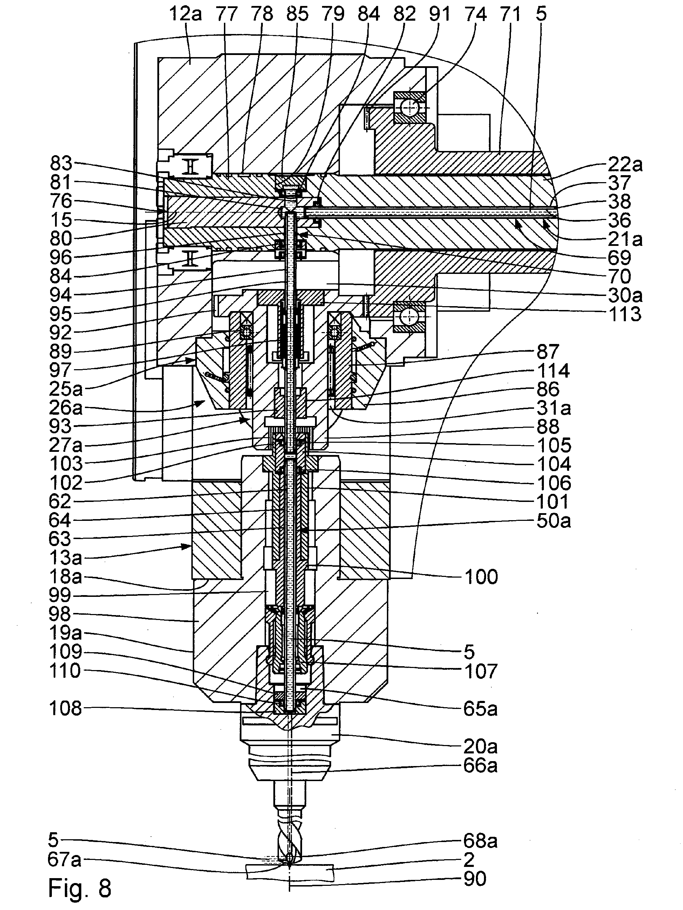

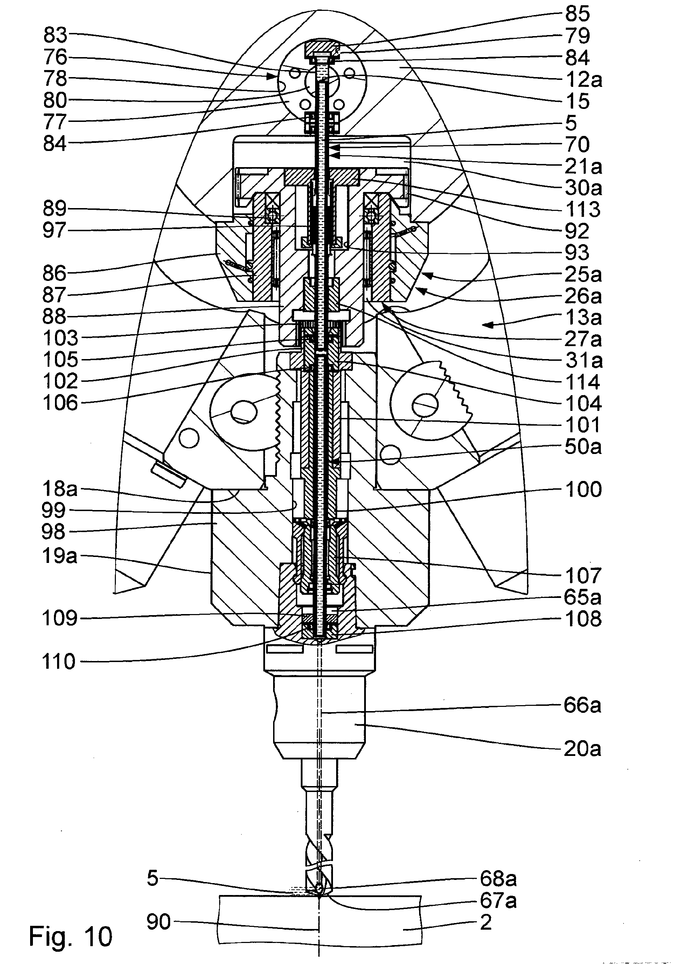

Zum Bearbeiten eines Werkstücks 2 mit dem drehanzutreibenden Werkzeug 20a wird der Kolben 27a parallel zu der Werkzeug-Drehachse 90 verlagert. Hierdurch kommt die Verzahnung 92 in Eingriff mit der Verzahnung 91. Das Werkzeug 20a wird nun mittels der Antriebseinheit 72 über die Antriebswelle 71, das erste Antriebsteil 88 und das zweite Antriebsteil 98, in dem das Werkzeug 20a aufgenommen ist, drehangetrieben. Durch das Verlagern des Kolbens 27a wird weiterhin der zweite Leitungsabschnitt 70 der Zuführleitung 21a in die Einführöffnung 57a eingeführt und auf diese Weise mit der zweiten Zuführleitung 50a des in der Arbeitsstellung befindlichen Werkzeugs 20a verbunden. Das Einführen wird durch das trichterförmige Einsatzteil 104 erleichtert. Während des Drehantreibens des Werkzeugs 20a steht der zweite Leitungsabschnitt 70 und die jeweilige zweite Zuführleitung 50a des in der Arbeitsstellung befindlichen Werkzeugs 20a um die Werkzeug-Drehachse 90 fest. Das kryogene Kühlmedium 5 wird nun über die Zuführleitungen 21a, 50a zugeführt und über den Kühlkanal 66a zu der Werkzeugschneide 67a geleitet, wo es durch die Austrittsöffnung 68a austritt und die Werkzeugschneide 67a während der Bearbeitung des Werkstücks 2 kühlt. Diese erste Stellung, in der die erste Zuführleitung 21a mit der zweiten Zuführleitung 50a verbunden ist, ist in den Fig. 8 und 10 gezeigt.

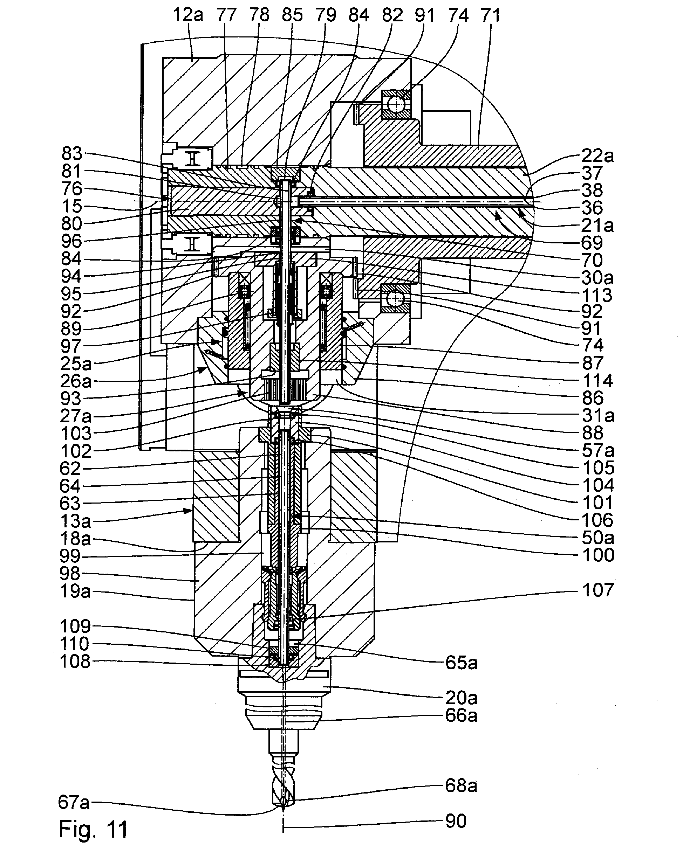

Zum Werkzeugwechsel wird das drehangetriebene Werkzeug 20a zunächst angehalten, anschließend wird der Kolben 27a parallel zu der Werkzeug-Drehachse 90 verlagert, sodass der zweite Leitungsabschnitt 70 aus der zweiten Zuführleitung 50a entfernt wird und die Verzahnung 92 nicht länger in Eingriff mit der Verzahnung 91 ist. Diese zweite Stellung, in der die erste Zuführleitung 21a von der zweiten Zuführleitung 50a getrennt ist, ist in Fig. 11 dargestellt. Das Drehteil 13a kann nun mittels der Antriebseinheit 14a um die Drehachse 15 in eine neue Drehstellung verschwenkt werden, in der ein neues Werkzeug 20a sich in der Arbeitsstellung befindet. Anschließend wird der Kolben 27a wieder in Richtung des Werkzeugs 20a verlagert, bis die Verzahnung 92 in Eingriff mit der Verzahnung 91 und der zweite Leitungsabschnitt 70 in die Einführöffnung 57a eingeführt ist. Die Bearbeitung kann nun in der bereits beschriebenen Weise mit dem neuen Werkzeug 20a fortgeführt werden, wenn dieses drehanzutreiben ist. Muss das neue Werkzeug 20a zur Bearbeitung feststehen, so wird in der bereits beschriebenen Weise das kryogene Kühlmedium 5 zugeführt, jedoch das Antriebsteil 98 mittels der Antriebseinheit 72 nicht drehangetrieben. In diesem Fall kann die Antriebseinheit 72 oder ein anderer Mechanismus zum Festhalten bzw. Verklemmen des Werkzeughalters 19a eingesetzt werden, sodass das zugehörige Werkzeug 20a um die Werkzeug-Drehachse 90 feststeht.

Hinsichtlich des weiteren Aufbaus und der weiteren Funktionsweise wird auf das erste Ausführungsbeispiel verwiesen.

Mit dem erfindungsgemäßen Bearbeitungssystem 1, 1a können beispielsweise Titanlegierungen, Gusseisen mit Lamellengraphit, Gusseisen mit Kugelgraphit oder andere schwer zu bearbeitende Materialien bearbeitet werden. Als Werkstücke 2 können Wellen, wie beispielsweise Ritzelwellen, Kurbelwellen, Nockenwellen, Schaltwellen oder andere wellenförmige Bauteile sowie Flanschteile und Zahnräder bearbeitet werden. Mittels des Bearbeitungssystems 1, 1a können die Werkstücke 2 durch Drehen, Fräsen, Kaltwalzen, Verzahnen, Bohren, Kurbelwellen- bzw. Nockenwellenfräsen oder Schleifen bearbeitet werden.

## Patentansprüche

1. Werkzeugrevolver zum Bearbeiten von Werkstücken mit
- einem Gehäuse (11; 11a),
- einer an dem Gehäuse (11; 11a) angeordneten Antriebseinheit (14; 14a), und
- einem Drehteil (13; 13a), das
- - mehrere umfangsseitig angeordnete Werkzeughalter (19; 19a) zur Aufnahme von Werkzeugen (20; 20a) aufweist und
- - relativ zu dem Gehäuse (11; 11a) mittels der Antriebseinheit (14; 14a) um eine Drehachse (15) in mehrere Drehstellungen drehbar ist,
- einer zumindest abschnittsweise parallel zu der Drehachse (15) angeordneten ersten Zuführleitung (21; 21a) zum Zuführen eines kryogenen Kühlmediums (5), und
- mehreren zumindest abschnittsweise quer zu der Drehachse (15) angeordneten zweiten Zuführleitungen (50; 50a) zum Zuführen des kryogenen Kühlmediums (5),
- einer Hubeinheit (25; 25a) zum zumindest abschnittsweise linearen Verlagern der ersten Zuführleitung (21; 21 a), wobei
- - die erste Zuführleitung (21; 21 a) in einer ersten Stellung mit einer der zweiten Zuführleitungen (50; 50a) zum Übertragen des kryogenen Kühlmediums (5) zu einem Werkzeug (20; 20a) verbunden ist, und
- - die erste Zuführleitung (21; 21 a) in einer zweiten Stellung von den zweiten Zuführleitungen (50; 50a) zum Verändern der Drehstellung des Drehteils (13; 13a) getrennt ist,
**dadurch gekennzeichnet,**
**dass** die erste Zuführleitung (21; 21a) zumindest abschnittsweise vakuumisoliert ausgebildet ist, und
**dass** die erste Zuführleitung (21; 21a) ein inneres Rohr (36; 36, 94) und ein dieses umgebendes äußeres Rohr (37; 37, 95) aufweist und mindestens eines dieser Rohre (36, 37; 36, 37, 94, 95) in seiner Länge veränderbar ist.

2. Werkzeugrevolver nach Anspruch 1, **dadurch gekennzeichnet,**
**dass** die zweiten Zuführleitungen (50; 50a) jeweils zumindest abschnittsweise thermisch isolierend und insbesondere vakuumisoliert ausgebildet sind.

3. Werkzeugrevolver nach Anspruch 1 oder 2, **dadurch gekennzeichnet,**
**dass** die Hubeinheit (25; 25a) als doppelt wirkende Kolben-Zylinder-Einheit ausgebildet ist, die mit der ersten Zuführleitung (21; 21 a) gekoppelt ist.

4. Werkzeugrevolver nach einem der Ansprüche 1 bis 3, **dadurch gekennzeichnet,**
**dass** die zweiten Zuführleitungen (50; 50a) an ihren der ersten Zuführleitung (21; 21 a) zugewandten Enden jeweils trichterförmig ausgebildet sind, und insbesondere eine Dichtung (58; 105) aufweisen.

5. Werkzeugrevolver nach einem der Ansprüche 1 bis 4, **dadurch gekennzeichnet,**
**dass** die erste Zuführleitung (21) beabstandet zu der Drehachse (15) angeordnet ist.

6. Werkzeugrevolver nach einem der Ansprüche 1 bis 5, **dadurch gekennzeichnet,**
**dass** die zweiten Zuführleitungen (50) jeweils einen parallel zu der Drehachse (15) verlaufenden ersten Leitungsabschnitt (51) und einen quer zu der Drehachse (15) verlaufenden zweiten Leitungsabschnitt (52) aufweisen.

7. Werkzeugrevolver nach einem der Ansprüche 1 bis 4, **dadurch gekennzeichnet,**
**dass** die erste Zuführleitung (21 a) einen konzentrisch zu der Drehachse (15) verlaufenden ersten Leitungsabschnitt (69) und einen quer zu der Drehachse (15) verlaufenden zweiten Leitungsabschnitt (70) aufweist, der mittels der Hubeinheit (25a) quer zu der Drehachse (15) verlagerbar ist.

8. Werkzeugrevolver nach Anspruch 7, **dadurch gekennzeichnet,**
**dass** die zweiten Zuführleitungen (50a) jeweils quer zu der Drehachse (15) verlaufen.

9. Werkzeugrevolver nach Anspruch 7 oder 8, **dadurch gekennzeichnet,**
**dass** in der ersten Stellung der Hubeinheit (25a) der Werkzeughalter (19a), dessen zugehörige zweite Zuführleitung (50a) mit der ersten Zuführleitung (21 a) verbunden ist, mittels einer Antriebseinheit (72) um eine Werkzeug-Drehachse (90) drehantreibbar ist.

10. Werkzeugrevolver nach Anspruch 9, **dadurch gekennzeichnet,**
**dass** der Werkzeughalter (19a) um die konzentrisch zu der Werkzeug-Drehachse (90) angeordnete zweite Zuführleitung (50a) drehantreibbar ist.

11. Bearbeitungssystem zum Bearbeiten von Werkstücken mit
- einem Werkzeugrevolver (3; 3a) nach einem der Ansprüche 1 bis 10,
- einem thermisch isolierten Speicher (4) zum Bereitstellen eines kryogenen Kühlmediums (5),
- einem Kühlaggregat (6) zum Kühlen des kryogenen Kühlmediums (5), und
- einer thermisch isolierten Versorgungsleitung (8) zum Zuführen des kryogenen Kühlmediums (5) von dem Speicher (4) zu dem Werkzeugrevolver (3; 3a).

## Claims

1. Tool turret for machining workpieces comprising
- a housing (11; 11a),
- a drive unit (14; 14a) mounted on the housing (11; 11a), and
- a rotary part (13; 13a)
- - having several tool holders (19; 19a) arranged on the circumference for holding tools (20; 20a) and
- - being rotatable relative to the housing (11; 11a) by means of the drive unit (14; 14a) around an axis of rotation (15) into several rotary positions;
- a first feed line (21; 21 a) arranged parallel to the axis of rotation (15) at least in sections for feeding a cryogenic cooling medium (5), and,
- several second feed lines (50; 50a) arranged at least partially transversely to the axis of rotation (15) for feeding the cryogenic cooling medium (5),
- a linear actuator (25; 25a) for moving the first feed line (21; 21 a) in a linear manner at least in sections, whereby
- - the first feed line (21; 21 a) is connected in a first position to one of the second feed lines (50; 50a) for transferring the cryogenic cooling medium (5) to a tool (20; 20a), and,
- - the first feed line (21; 21a) is separated in a second position from the second feed lines (50; 50a) to change the rotary position of the rotary part (13; 13a),
**characterized in that** the first feed line (21; 21a) is designed vacuum insulated at least in sections; and
that the first feed line (21; 21) comprises an inner pipe (36; 36, 94) and an outer pipe (37; 37, 95) surrounding it, and at least one of these pipes (36, 37; 36, 37, 94, 95) is changeable in length.

2. Tool turret according to claim 1, **characterized in that** the second feed lines (50; 50a) are each designed thermally insulated and in particular vacuum-insulated at least in sections.

3. Tool turret according to claim 1 or 2, **characterized in that** the linear actuator (25; 25a) is designed as a double-acting piston-cylinder unit that is coupled with the first feed line (21; 21a).

4. Tool turret according to one of claims 1 to 3, **characterized in that** the second feed lines (50; 50a) are each designed in a funnel shape at their ends that are facing toward the first feed line (21; 21a) and in particular have a gasket (58; 105).

5. Tool turret according to one of claims 1 to 4, **characterized in that** the first feed line (21) is mounted at a distance from the axis of rotation (15).

6. Tool turret according to one of claims 1 to 5, **characterized in that** the second feed lines (50) each have a first line section (51) running parallel to the axis of rotation (15) and a second line section (52) running transversely to the axis of rotation (15).

7. Tool turret according to one of claims 1 to 4, **characterized in that** the first feed line (21a) has a first line section (69) that runs concentrically to the axis of rotation (15) and a second line section (70) that runs transversly to the axis of rotation (15), which is movable transversly to the axis of rotation (15) by means of the linear actuator (25a).

8. Tool turret according to claim 7, **characterized in that** the second feed lines (50a) each run transversely to the axis of rotation (15).

9. Tool turret according to claim 7 or 8, **characterized in that** in the first position of the linear actuator (25a), the tool holder (19a), the associated second feed line (50a) of which is connected to the first feed line (21a), is rotatably drivable by a drive unit (72) around a tool axis of rotation (90).

10. Tool turret according to claim 9, **characterized in that** the tool holder (19a) is mounted so that it is rotatably drivable around the second feed line (50a) arranged concentrically to the tool axis of rotation (90).

11. Machining system for processing workpieces with
- a tool turret (3; 3a) according to one of claims 1 to 10,
- a thermally insulated reservoir (4) for providing a cryogenic cooling medium (5),
- a cooling unit (6) for cooling the cryogenic cooling medium (5), and
- a thermally insulated supply line (8) for feeding the cryogenic cooling medium (5) from the reservoir (4) to the tool turret (3; 3a).

## Revendications

1. Tourelle porte-outils pour l'usinage de pièces comprenant
- un boîtier (11 ; 11a),
- une unité d'entraînement (14 ; 14a) disposée sur le boîtier (11 ; 11a), et
- une partie rotative (13 ; 13a) qui
- - présente plusieurs porte-outils (19 ; 19a) disposés sur le périmètre pour l'admission d'outils (20 ; 20a), et
- - peut être en rotation par rapport au boîtier (11 ; 11a) dans plusieurs positions de rotation autour d'un axe de rotation (15) au moyen de l'unité d'entraînement (14 ; 14a),
- une première conduite d'acheminement (21 ; 21a) disposée au moins partiellement de manière parallèle à l'axe de rotation (15) pour l'acheminement d'un fluide de refroidissement cryogénique (5), et
- plusieurs conduites d'acheminement secondaires (50 ; 50a), disposées au moins partiellement de manière transversale par rapport à l'axe de rotation (15), pour l'acheminement du fluide de refroidissement cryogénique (5),
- une unité de levage (25 ; 25a) pour le déplacement linéaire, au moins sur des portions, de la première conduite d'acheminement (21 ; 21a), où
- - la première conduite d'acheminement (21 ; 21a) est reliée, dans une première position, avec l'une des conduites d'acheminement secondaires (50 ; 50a) pour la transmission du fluide de refroidissement cryogénique (5) vers un outil (20 ; 20a), et
- - la première conduite d'acheminement (21 ; 21a) est séparée dans une deuxième position des conduites d'acheminement secondaires (50 ; 50a) pour la modification de la position en rotation de la partie rotative (13 ; 13a),
**caractérisée en ce**
**que** la première conduite d'acheminement (21 ; 21a) est conçue au moins partiellement isolée par du vide, et
- **que** la première conduite d'acheminement (21 ; 21a) présente un tube interne (36 ; 36 ; 94) et un tube externe (37 ; 37 ; 95), entourant celui-ci, et qu'au moins un de ces tubes (36 ; 37 ; 36, 37, 94, 95) peut être modifié dans sa longueur.

2. Tourelle porte-outils selon la revendication 1, **caractérisée en ce**
**que** les conduites d'acheminement secondaires (50 ; 50a) sont conçues, chacune, isolées thermiquement, au moins de manière partielle, et notamment isolées par le vide.

3. Tourelle porte-outils selon les revendications 1 ou 2, **caractérisée en ce**
**que** l'unité de levage (25 ; 25a) est conçue comme une unité agissant par un couplage double piston-cylindre, qui est couplée avec la première conduite d'acheminement (21 ; 21a).

4. Tourelle porte-outils selon l'une des revendications 1 à 3, **caractérisée en ce**
**que** les conduites d'acheminement secondaires (50 ; 50a) sont conçues, chacune, à son extrémité, orientée vers la première conduite d'acheminement (50 ; 50a), sous la forme d'un entonnoir et présentent notamment un joint (58 ; 105).

5. Tourelle porte-outils selon l'une des revendications 1 à 4, **caractérisée en ce**
**que** la première conduite d'acheminement (21) est disposée espacée par rapport à l'axe de rotation (15).

6. Tourelle porte-outils selon l'une des revendications 1 à 5, **caractérisée en ce**
**que** les conduites d'acheminement secondaires (50) présentent chacune une première partie (51) de conduite, s'étendant parallèle à l'axe de rotation (15), et une deuxième partie (52) de conduite, s'étendant de manière transversale par rapport à l'axe de rotation (15).

7. Tourelle porte-outils selon l'une des revendications 1 à 4, **caractérisée en ce**
**que** la première conduite d'acheminement (21a) présente une première partie (69) de conduite, s'étendant de manière concentrique par rapport à l'axe de rotation (15), et une deuxième partie (70) de conduite, s'étendant de manière transversale par rapport à l'axe de rotation (15), partie qui peut être déplacée de manière transversale par rapport à l'axe de rotation (15) au moyen de l'unité de levage (25a).

8. Tourelle porte-outils selon la revendication 7, **caractérisée en ce**
**que** les conduites d'alimentation secondaires (50a) s'étendent chacune transversalement par rapport à l'axe de rotation (15).

9. Tourelle porte-outils selon les revendications 7 ou 8, **caractérisée en ce**
**que**, dans la première position de l'unité de levage (25a), le porte-outils (19a), dont la conduite d'acheminement secondaire (50a) correspondante est reliée avec la première conduite d'acheminement (21a), peut être entraîné en rotation autour de l'axe de rotation de l'outil (90) au moyen d'une unité d'entraînement (72).

10. Tourelle porte-outils selon la revendication 9, **caractérisée en ce**
**que** le porte-outils (19a) peut être entraîné en rotation autour de la conduite d'acheminement secondaire (50a) disposée de manière concentrique par rapport à l'axe de rotation de l'outil (90).

11. Système d'usinage destiné à l'usinage de pièces comprenant
- une tourelle porte-outils (3 ; 3a) selon l'une des revendications 1 à 10,
- un récipient de réserve (4), isolé thermiquement, pour la mise à disposition d'un fluide de refroidissement cryogénique (5),
- un groupe de refroidissement (6) pour le refroidissement du fluide de refroidissement cryogénique (5), et
- une conduite d'alimentation (8), isolée thermiquement, pour l'acheminement du fluide de refroidissement cryogénique (5) du récipient de réserve (4) vers la tourelle porte-outils (3 ; 3a).
